# EUROPEAN PATENT APPLICATION

(11) **EP 0 899 084 A1**
(43) Date of publication of application: **03.03.1999**
(21) Application number: 97202619.9
(22) Date of filing: 26.08.1997
(51) Int. Cl.: B29C 65/18, B31B 29/64, B65B 9/08

(54) **Improved heat sealing method and apparatus in continuous self-standing upright bag forming/filling machine**

(71) Applicant: Shinsei Co., Ltd., Koshigaya-shi, Saitama-ken (JP)
(72) Inventor: Akaho, Masao, Koshigaya-shi, Saitama-ken (JP)
(74) Representative: Marchi, Massimo

(57) **Abstract**

Improved apparatus in a continuous self standing upright bag (12) forming/filling comprises heat sealing stations (4a,4b) each have a hot plate and an abutment (3) for heat sealing therebetween a laminate paper previously folded into a sectionally w-shaped form with long front and back layers and short intermediate layers.

The hot plate (2) is provided thereon with both end side heat sealing projections (2a) and bottom side heat sealing projection (2b), said end side heat sealing projections being made thicker than the bottom side heat sealing projection by a value corresponding to difference of thickness of the total thickness of the four layered lower portion of the preformed laminate paper from that of two layered upper portion thereof, and there are further provided on the same hot plate such spot heat sealing projections (2c,2d) that are thicker than the end side heat sealing projections at the intermediate joining portion between the end side heat sealing projections and the bottom side heat sealing projection, so that end side heat sealing and bottom side heat sealing as well as spot heat sealing on the intermediate joining portions can be carried out simultaneously.

## Description

### Technical Field of Invention

This invention relates to an improved heat sealing method and apparatus for forming/filling self-standing upright bags in a continuous bag forming/filling machine.

### Prior Art

Self-standing upright bags are generally formed with one sheet of laminate paper which is preformed into sectionally W -shaped form having four layers, viz., two long front and back layers and two short intermediate uprising layers, by folding the laminate paper twice.

In a conventional machine as show in Fig,4, bottom side portion A and end side portions B of the W -shaped form thus preformed are separately heat sealed at bottom side heat sealing stations 41, 41' and end side heat sealing stations 42, 42' in the course of intermittent feeding of the laminate paper thus preformed to form a three sides seal 9, and then portions C between the bottom side portion A and the end side portions B are spot heated at a spot heating station 43 to compensate the difference of thickness at that portion owing to the difference of number of the layers at the bottom side portion A and the end side portion B.

Then, the heat sealed end side portions B are vertically cut along their center lines by a cutter 44 to complete the formation of the self-standing upright bag.

After completion of the formation of the self-standing upright bag, two short intermediate layers are spread and flattened to form the bottom of the bag thereby allowing the bag to stand stably upright.

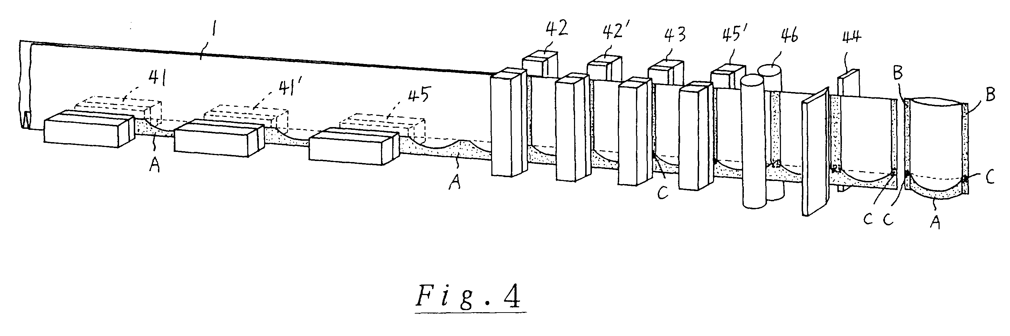

The self-standing upright bag after formation can be filled with contents, such as drinks, retort foods and the like, and then the upper opening of the bag is closed by heat sealing. In Fig 4, other reference numerals 45, 45' and 46 represent a bottom side water-cooling station, an end side water-cooling station and a feed roll, respectively.

With the above conventional continuous bag forming/filling machine, there has been involved such problem that, due to separate heat sealing of the bottom side portion and the end side portions followed by cutting and filling in the course of intermittent feeding of the preformed W -shaped layers, many steps are inevitably required.

Further, there has been involved another problem with the conventional bag forming/filling machine requiring separate heat sealing of the bottom side and end sides that, in case of the bag for filling drinks, retort foods and the like, repeated heat sealing and spot sealing of the bottom side A, the end sides B and the intermediate portions C are required to secure complete sealing of the bag, and accordingly the entire machine becomes elongated construction.

Moreover, in case of such bag as bearing various printings thereon, it is not easy to correctly arrange the printed face of each bag in good agreement with the position of each heat sealing station and thus there may be caused such problem that the front and back layers slide or misalign each other during trying to correctly arrange that portion into good agreement.

Further, due to the difference of total thickness of each of the end side portions from that of the bottom side portion, there can be such problem that it causes partial sealing deficiency.

Though such a proposal has been made to solve the above problem that provides difference of temperature of the end side heat sealed portions from the bottom side heat sealed portion corresponding to the difference of total thickness of the portion of the four folded layers from that of the two folded layers, there still remains another problem that makes it unpracticable due to the fact that control of the difference of temperature is very difficult.

### Summery of the Invention

The present invention intends to solve the above problems by improving the heat sealing station such that both the end side heat sealing projections and the bottom side heat sealing projection are provided on each hot plate and the end side heat sealing projections are made thicker than the bottom side heat sealing projection by a value corresponding to difference of thickness of the total thickness of the four layered lower portion of the preformed laminate paper from that of two layered upper potion thereof, and such spot heat sealing projections thicker than the end side heat sealing projections are provided on the intermediate joining portion between the end side heat sealing projections and the bottom side heat sealing projection, so that end side heat sealing and bottom side heat sealing as well as spot heat sealing on the intermediate portions between the end side heat sealing portion and the bottom side heat sealing portion can be carried out simultaneously.

### Brief Explanation of the Drawings

One example of the present invention will be now described in detail with reference to the accompanying drawings, wherein.
Fig.1 is a perspective view showing bag forming steps in one example according to the present invention.
Fig.2 is an enlarged perspective view of the heat sealing stations of the present invention.
Fig.3 is a partially enlarged side view of the heat sealing station of the present invention, and
Fig.4 is a perspective view showing a conventional bag forming steps for heat sealing upright bags.

### Preferred Embodyment of the Invention

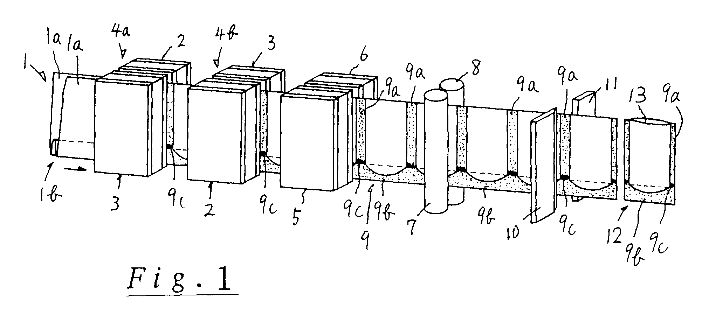

Referring now to Fig.1, there are arranged on both sides of the feeding passage for intermittently feeding a sheet of laminate paper 1 which is previously folded into sectionally W -shaped four layers comprising long front and back layers 1a, 1a and short intermediate layers 1b, 1b, in juxtaposed but oppositely oriented relation a first heat sealing station 4a and a second heat sealing station each of which comprises a hot plate 2 and an abutment 3.

Nextly, there are also arranged a pair of water-cooling members 5, 6 of substantially the same shape as the heat-sealing stations 4a, 4b and sandwiching the laminate paper 1 on both sides of the feeding passage.

Similarly oppositely arranged on both sides of the feeding passage are a pair of feed rollers 7, 8 for intermittently feeding the laminate paper 1 and a cutter 10 for vertically cutting the heat sealed end side portions 9a along a center line thereof and an abutment member 11 for receiving the cutter 10,

Respective movements of the members inclusive of the first heat sealing station 4a to the cutter 10 and the abutment 11 are controlled for intermittently feeding the laminate paper 1 and cutting the heat sealed side portion 9a.

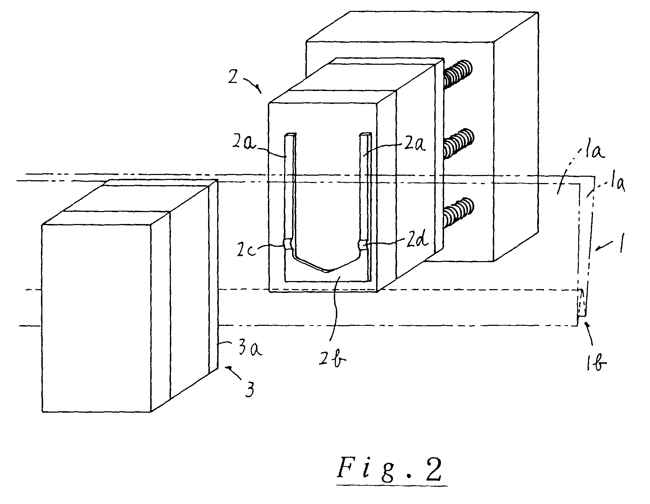

As shown in Fig.2, each of the first and second heat sealing stations 4a, 4b comprises a hot plate 2 having end side heat sealing members 2a, 2a and a bottom side heat sealing member 2b respectively project therefrom facing the abutment 3.

Further, there are integrally provided a pair of spot heat sealing projections 2c, 2d which connect the end side heating members 2a, 2a and the bottom side heat sealing members 2b and further project therefrom.

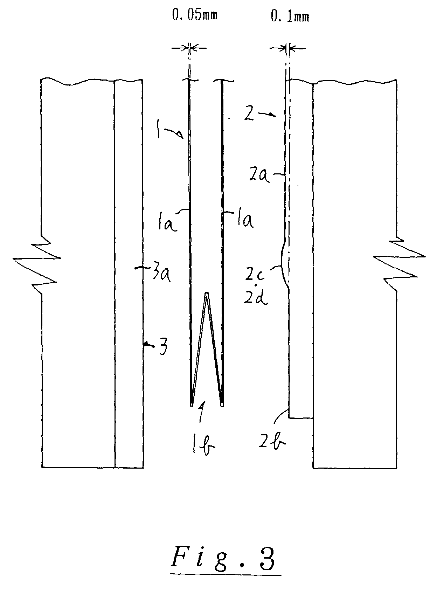

Further, as better shown in Fig.3, the end side heat sealing members 2a, 2a are formed projecting in such thickness as is thicker than the thickness of the bottom side heating member 2b by a value corresponding to the difference of total thickness of the four layered portion from that of the two layered portion, viz., the thickness corresponding to two layers.

In the embodiment, the laminate paper 1 is 0.05mm thick and accordingly each total thickness of the end side heat sealing members 2a, 2a is made thicker by 0.1mm which corresponds to the difference of the total thickness 0.05mm × 4 of the four layered portion, from that of the two layered portion, viz,. 0.05mm × 2.

However this value may vary depending on the thickness of the laminate paper 1,

As shown in the figure, the spot sealing projections 2c, 2d are formed thicker than the end side heat sealing members 2a, 2a.

The abutment 3 oppositely arranged to the hot plate 2 so as to sandwich the folded laminate paper 1 is fixedly provided on its inner surface with a thick rubber plate 3a having flat surface and of heat-resistance to effectively receive the spot heating projections.

Further, as previously described, the second heat sealing station 4b is arranged with both the hot plate 2 and the abutment 3 oppositely oriented to those of the first heat-sealing station 4a, as shown in Fig. 2.

In operation by rotating the feed rollers 7, 8, the folded laminate paper 1 is intermittently fed in the direction of the arrow mark , and, when stopped in the first heat sealing station 4a, it is heat-sealed simultaneously, at both the side portion 1b of the folded laminate paper 1 to form three sides seal 9.

Simultaneously, by pressing the projections 2c, 2d onto the abutment 3, three are formed between the end side heat sealed portions 9c, 9a and the bottom side heat sealed portion 9b such spot seals 9c, 9c that are more intensive than said heat-sealed portions 9a, 9a, and 9b.

Nextly, the folded laminate paper 1 is fed to the portion of the second heat sealing station 4b and subjected there to secondary heat sealing and spot sealing, from opposite side, of the three side seals 9 and the spot seals 9c respectively formed in the first heat-sealing station 4a, thereby intensifying the sealing.

The secondary heat sealing by the station 4b may be omitted depending on the case. In that case, the hot plate 2 and the abutment are left detouched lest they should be activated.

The folded laminate paper 1 thus three sides heat-sealed is then fed to the position of the cutter 10 and the end side heat-sealed portion 9a is vertically cut along the center line thereof to form self standing upright bag 12,

Then, the bag 12 is filled with contents ( not shown) while spreading and flattering both upright intermediate layers 1c, 1d of the bottom portion so as to allow the bag 12 to self-stand upright, and the upper opening 13 of the bag 12 is heat-sealed to close the bag 12.

Even when the bottom intermediate layers 1c, 1d are repeatedly spread out and flattened, there can be caused no peeling-off of the end side heat-sealed portions 9a, 9a and the bottom side heat-sealed portion 9b due to such action, since, the boarder portions therebetween are provided with the intensive spot seals 9c, 9c.

Constructed as above both the end side heat sealing members and the bottom side heat sealing member are provided on the same hot plate as projections with the former end side heat sealing members formed thicker than the latter bottom side heat sealing member by a value corresponding to the difference of the total thickness of the upper end side two-layered portion from that of the lower bottom side four layered portion, and further the spot heat sealing members are provided each as a further projection thicker than the end side projection at the intermediate joining portion of the end side projection and the bottom side projection.

Accordingly, irrespective of the difference in thickness of the upper end side portions and the lower bottom side portion of the W -shapedly pre-folded laminate paper intermittently fed to the heat sealing station, both the end side and bottom side heat sealing as well as the spot heat sealing can be carried out simultaneously on the same heat sealing station, thereby giving rise to shortened heat sealing steps less than half compared to those in the conventional continuous bag forming machine.

As a result of shortened heat sealing steps, it has become easy to correctly arrange the printed face of each bag in good agreement with the position of the heat sealing station, thereby remarkably reducing possible sliding out or misaligment of the front and back layers each other.

As a result of the formation of the end side heat sealing projections thicker than the bottom side heat sealing projection, there can be formed a satisfactory three sides seal by evenly pressing both the upper two layered portion and the lower four-layered portion of the pre-folded laminate paper.

Further, as a result of the formation of the spot heat sealing projection thicker than the end side heat sealing projection, there can be provided such spot heat sealing which is more intensive than the end side and bottom side heat sealing, thereby giving rise to no peeling off of the end side and bottom side seals even when the upwardly folded bottom layers are spread and flattened for the bag to be placed in a state of self-standing.

Since the end side and bottom side heat sealing projections as well as the spot heat sealing projections are heated by a same temperature, it has become quite easy to control the temperature.

## Claims

1. Improvement in a continuous self-standing upright bag forming/filling machine comprising heat sealing stations each having a hot plate and an abutment for intermittently heat sealing therebetween a laminate paper preformed by folding into sectionally W -shaped four layers, characterized in that both the end side heat sealing projections and the bottom side heat sealing projection are provided on each hot plate and the formers are made thicker than the latter by a value corresponding to difference of thickness of the total thickness of the four layered lower portion of the preformed laminate paper from that of two layered upper potion thereof, and such spot heat sealing projections that are thicker than the end side heat sealing projections are provided on the intermediate joining portion between the end side heat sealing projections and the bottom side heat sealing projection, so that end side heat sealing, bottom side heat sealing and spot heat sealing on the intermediate portions between the end side heat sealing portion and the bottom side heat sealing portion can be carried out simultaneously.

2. Improvement in a continuous self-standing upright bag forming/filling method with employment of heat sealing stations each having a hot plate and an abutment for intermittently heat sealing therebetween a laminate paper preformed by folding into sectionally W -shaped four layers, characterized by carrying out the steps of end side heat sealing, bottom side heat sealing and spot heat sealing of intermediate portions between the end side heat sealing portion and the bottom side heat sealing portion simultaneously and at the same heat sealing station which is constructed such that both the end side heat sealing projections and the bottom side heat sealing projection are provided on the same hot plate and the former end side heat sealing projections are made thicker than the latter bottom side heat sealing projection by a value corresponding to difference of thickness of the total thickness of the four layered lower portion of the preformed laminate paper from that of two layered upper potion thereof, and such spot heat sealing projections that are thicker than the end side heat sealing projections are provided on the intermediate joining portion between the end side heat sealing projections and the bottom side heat sealing projection.
